# EUROPÄISCHE PATENTANMELDUNG

(11) **EP 0 532 137 A1**
(43) Veröffentlichungstag der Anmeldung: **17.03.1993**
(21) Anmeldenummer: 92250240.6
(22) Anmeldetag: 02.09.1992
(51) Int. Cl.: F27D 5/00, F27B 9/24, B65G 23/14, B65G 47/244, F26B 15/14

(54) **Brennofen zur Herstellung von keramischen Produkten und Verfahren zur Betriebführung des Brennofens**

(30) Priorität: 11.09.1991 DE 4130598
(71) Anmelder: KERABEDARF KERAMIK ENGINEERING GmbH, D-13403 Berlin (DE)
(72) Erfinder: Geismar, Bernd, W-1000 Berlin 30 (DE)

(57) **Zusammenfassung**

Es wird ein Brennofen (2) zur Herstellung keramischer Produkte mit einem Brennraum (1), welchen die keramischen Produkte im Durchlauf passieren, sowie ein Verfahren zur Betriebsführung des Brennofens (2) beschrieben, wobei die keramischen Produkte zusätzlich zu der Durchlaufbewegung durch den Brennraum (1) eine Rotation um die eigene Längsachse ausführen. Durchlauf und Rotation der keramischen Produkte erfolgt über ein im Unterteil des Brennofens angeordneten Antriebsmechanismus mit in den Brennraum hineinragenden Wellen (4) auf einer erfindungsgemäß gestalteten Aufnahme- und Haltevorrichtung (5) und ist getrennt voneinander stufenlos regelbar. Die Erfindung ermöglicht einen effektiven diskontinuierlichen Betrieb des Brennofens.

## Beschreibung

Die Erfindung betrifft einen Brennofen zur Herstellung von keramischen Produkten aus Feinkeramik bzw. aus Porzellan im Durchlaufverfahren, wobei die zu brennenden keramischen Produkte den Brennofen mittels einer erfindungsgemäßen Aufnahme- und Haltevorrichtung gesteuert durchlaufen sowie ein Verfahren zur Betriebsführung des Brennofens.

Es ist bekannt, in sogenannten Tunnelöfen feinkeramische Produkte zu brennen.

Der klassische Tunnelofen besteht aus einem gemauerten Kanal von ca. 30 bis 100 m Länge und 0,3 bis 1,2 m Breite. Die Ware wird auf ausgemauerten Brennwagen kontinuierlich durch den Ofen geschoben, wobei die Ware auf den Wagen in Regalen steht.

Die Nachteile dieser Tunnelöfen bestehen in der großen Trägheit der Öfen, die Variationen in Kapazität und Temperaturkurve nur bedingt zuläßt und einen kontinuierlichen Betrieb über Monate und Jahre erfordert sowie dem hohen spezifischen Energieverbrauch, bedingt durch die große Menge Brennhilfsmittel gegenüber der Menge der eigentlichen Ware und einer langen Brennzeit, bedingt durch den kompakten Besatzaufbau. Weiterhin besteht nur eine geringe Möglichkeit der Automation beim Be- und Entladen der Brennwagen, bedingt durch die Regalaufbauten.

Aus dem Stand der Technik sind auch Schnellbrandöfen bekannt, die kleiner sind als die Tunnelöfen, einen flachen Querschnitt aufweisen und bei denen die Regalaufbauten wegfallen, da die Ware auf die Brennwagen nur in einer Lage gesetzt wird.

Der Nachteil dieser Schnellbrandöfen besteht darin, daß sie ebenfalls einen Brennwagen benötigen und die Brennhilfsmittel einem hohen Verschleiß, bedingt durch den ständigen schnellen Temperaturwechsel, unterliegen. Weiterhin ist die Regelung dieser Öfen sehr empfindlich und sie sind sehr sensibel gegen Temperaturunterschiede im Ofenraum.

Diese Öfen haben eine geringe spezifische Leistung durch den niedrigen Ofenquerschnitt und es ist wie beim Tunnelofen ein kontinuierlicher Betrieb notwendig.

Ferner sind für die Herstellung von Fliesen sogenannte Rollenöfen bekannt, die jedoch für die Herstellung von beispielsweise Haushaltsgeschirr Setzplatten aus keramischem Material als Trägermedium benötigen.

Nachteilig ist bei den Rollenöfen die sehr empfindliche Regelung, die geringe spezifische Leistung durch den niedrigen Ofenquerschnitt, die Empfindlichkeit gegen Temperaturunterschiede im Ofenraum, der notwendige kontinuierliche Betrieb, ein hoher Verschleiß der Setzplatten durch den ständigen schnellen Temperaturwechsel sowie ein hoher Wartungsaufwand für die Rollen und den Rollenantrieb.

All die bekannten Lösungen haben den gemeinsamen Nachteil, daß die Trägermedien für die eigentlich zu brennenden keramischen Produkte eine relativ große Masse aufweisen und stets mit aufgeheizt werden müssen. Hieraus resultiert ein hoher Zeitaufwand und ein hoher Energieaufwand für die Herstellung der keramischen Produkte. Auch unterliegen die Trägermedien einem hohen Verschleiß, welcher sich nachteilig auf die Produktionskosten auswirkt.

Versuche, die Breite der Brennöfen zu vergrößern und damit den Durchsatz pro Zeiteinheit zu erhöhen, führten zu Problemen bei der Temperaturverteilung im Brennofen und letztendlich zu Qualitätsunterschieden bei der gebrannten keramischen Produkten.

Ein weiterer Nachteil der bekannten Brennöfen besteht darin, daß sie aufgrund ihrer Größe und damit Trägheit nur im kontinuierlichen Betrieb, d.h. dreischichtig über längere Zeiträume, rentabel zu betreiben sind. Dies zieht jedoch enorme Personalkosten nach sich.

Ausgehend von den dargestellten Nachteilen liegt der Erfindung die Aufgabe zugrunde, einen Brennofen für keramische Produkte und ein Verfahren zur Betriebsführung des Brennofens zu schaffen, wobei der Brennofen einen wirtschaftlichen diskontinuierlichen Betrieb und somit eine Minimierung der Personalkosten ermöglicht und keine aufwendigen Trägermedien für die Aufnahme der keramischen Produkte benötigt und das Verfahren zur Betriebsführung des Brennofens einen hohen Durchsatz keramischer Produkte pro Zeiteinheit bei gleichbleibend hoher Produktqualität gewährleistet.

Diese Aufgabe wird durch die kennzeichnenden Merkmale der Ansprüche 1 und 22 in Verbindung mit den Merkmalen im Oberbegriff sowie den zweckmäßig ausgestaltenden Merkmalen der zugehörigen Unteransprüche gelöst.

Der zur Lösung der Aufgabe vorgeschlagene erfindungsgemäße Brennofen zur Herstellung keramischer Produkte weist einen U-förmigen Brennraum und einen Ofenunterteil auf, wobei der Brennraum und der Unterteil des Brennofens durch ein Kanal verbunden ist. In diesem Kanal sind drehbar gelagerte Wellen angeordnet, welche im Brennraum eine Aufnahme- und Halterungsvorrichtung für die keramischen Produkte aufweisen.

Im Unterteil des Brennofens werden diese Wellen durch einen Kettenantrieb derart angetrieben, daß die auf der Aufnahme- und Haltevorrichtung befindlichen keramischen Produkte den Brennraum des Brennofens durchlaufen.

Gleichzeitig zu dem Durchlauf realisiert gemäß dem erfindungsgemäßen Verfahren zur Betriebsführung des Brennofens ein weiterer Antrieb eine Rotation der Welle und somit der keramischen Produkte im Brennraum.

Die Antriebe für den Durchlauf und die Rotation sind unabhängig voneinander hinsichtlich der Drehrichtung, Durchlaufgeschwindigkeit und Rotationsgeschwindigkeit regelbar.

Die temperaturmäßige Abdichtung des Brennraumes zum Unterteil des Ofens erfolgt über eine Regelung des Druckausgleiches.

Mit der Erfindung wird ein effektiver diskontinuierlicher Betrieb des Brennofens ermöglicht und eine hohe, gleichbleibende Qualität der hergestellten keramischen Produkte gewährleistet.

Die Erfindung wird nachstehend anhand von Ausführungsbeispielen näher erläutert. Es zeigen:
- Fig. 1: eine Draufsicht des erfindungsgemäßen Brennofens mit Beschickungs- und Entnahmeeinheit,
- Fig. 2: einen Schnitt durch den erfindungsgemäßen Brennofen mit Darstellung des Antriebes für Durchlauf und Rotation der keramischen Produkte,
- Fig. 3: eine Detaildarstellung des Kettenantriebes zur Realisierung des Durchlaufes durch den erfindungsgemäßen Brennofen sowie der Lagerung der Wellen,
- Fig. 4: eine Draufsicht auf den Kettenantrieb in Schnittdarstellung,
- Fig. 5: eine Draufsicht auf den Rotationsantrieb in Schnittdarstellung.

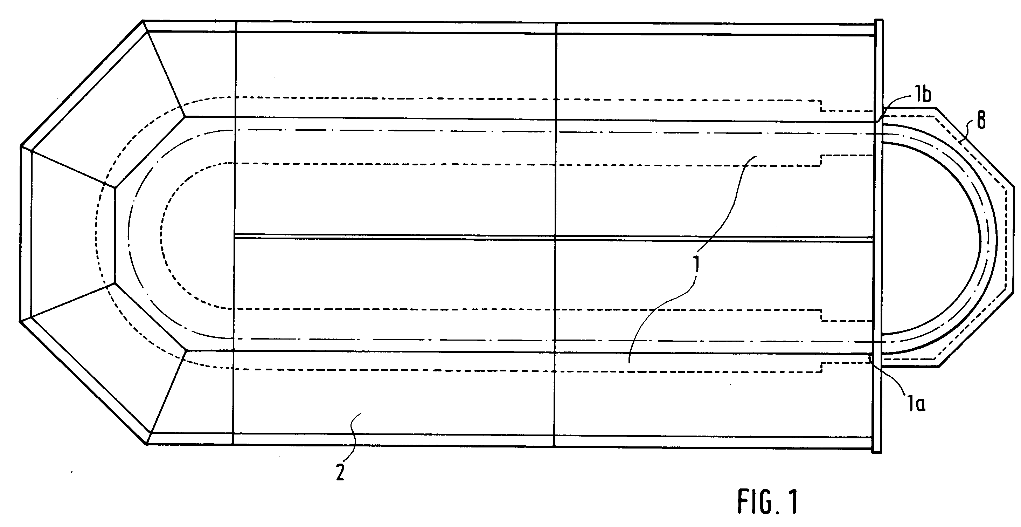

Wie in Fig. 1 dargestellt, weist der Brennofen 2 einen U-förmig angeordneten Brennraum 1 auf, welchen die keramischen Produkte 15 durchlaufen und hierbei gebrannt werden.

Der Brennraum 1 hat einen Brennraumeingang 1a und einen Brennraumausgang 1b. An den Brennraumeingang 1a und den Brennraumausgang 1b ist eine Beschickungs- und Entnahmeeinheit angeordnet, über welche der Brennofen 1 mit den noch ungebrannten keramischen Produkten 15 beschickt wird und über welchen die nach Durchlauf durch den Brennofen 2 gebrannten keramischen Produkte 15 entnommen werden. Die Beschickung und Entnahme kann sowohl manuell als auch automatisch erfolgen.

Für die automatische Beschickung und Entnahme ist es zweckmäßig, Industrieroboter einzusetzen, die entsprechend programmiert sind. Damit ergibt sich die Möglichkeit, eine automatisch arbeitende Fertigungstraße vom Fertigungsautomaten bis zur Verpackung einzurichten.

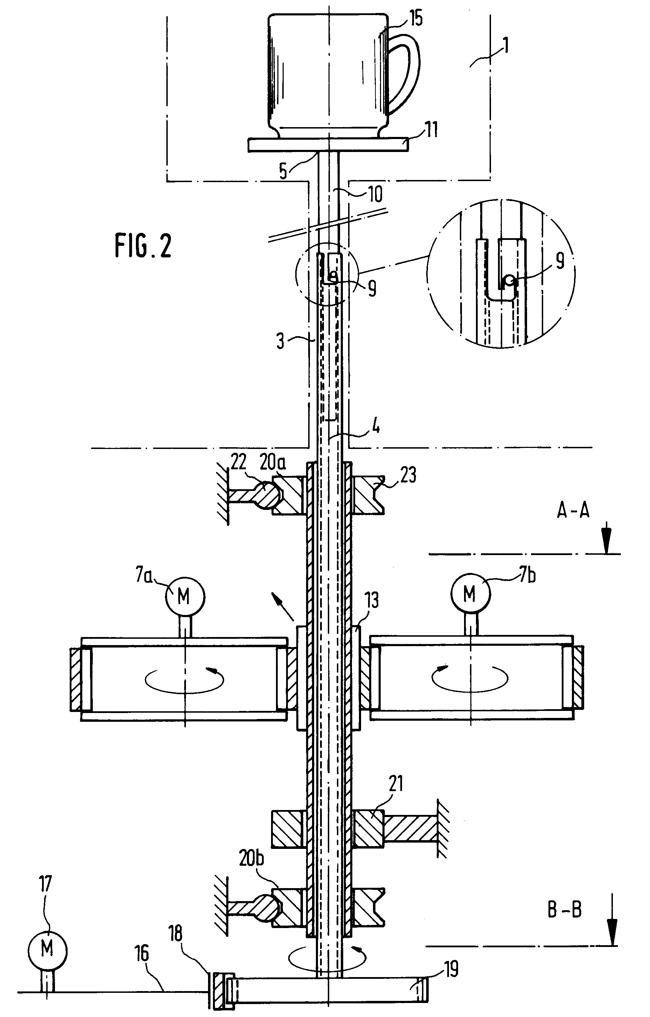

Fig. 2 zeigt einen Schnitt durch den erfindungsgemäßen Brennofen 2 mit Darstellung des Antriebes für den Durchlauf und die Rotation der keramischen Produkte 15.

In den Brennraum 1 ragt über einen Flansch 10 die Aufnahme- und Haltevorrichtung 5, auf welcher das zu brennende keramische Produkt 15, im vorliegenden Ausführungsbeispiel eine Tasse, angeordnet ist.

Die Aufnahme- und Haltevorrichtung 5 ist hierbei als Drehteller 11 ausgebildet. Der Drehteller 11 ist über den Flansch 10 mittels einem Bajonettverschluß 9 mit der Welle 4 lösbar verbunden.

Der untere Teil des Flansches 10 mit dem Bajonettverschluß 9 und der obere Teil der Welle 4 befindet sich in einem Kanal 3, welcher den Unterteil 6 des Brennofens 2 mit dem Brennraum 1 verbindet.

Anstelle des Drehtellers 11 kann die Aufnahme- und Haltevorrichtung 5, in der Figur nicht dargestellt, auch aus mindestens drei Metallstangen oder Metallrohren bestehen, welche nach oben geneigt an dem Flansch 10 angeordnet sind.

Die Metallstangen oder Metallrohre weisen im Normfall eine Neigung von ca. 2° nach oben auf.

Eine derartige Konstruktion minimiert Masse und Volumen der Aufnahme- und Haltevorrichtung 5 und dient neben der Aufnahme und Halterung der keramischen Produkte 15 gleichzeitig zu deren Zentrierung.

Der Durchmesser der Aufnahme- und Haltevorrichtung 5, also des Drehtellers 11 bzw. der Konstruktion aus Metallrohren oder Metallstangen, ist der Größe der zu brennenden keramischen Produkte 15 angepaßt.

Dadurch, daß die Aufnahme- und Haltevorrichtung 5 über den Bajonettverschluß 9 lösbar mit der Welle 4 verbunden ist, ist ein schneller Austausch der Aufnahme- und Haltevorrichtung 5 in Abhängigkeit der Größe der zu brennenden keramischen Produkte 15 möglich.

Die Aufnahme- und Haltevorrichtung 5, gegebenenfalls auch der Flansch 10 mit dem Bajonettverschluß 9, sind vollständig oder zumindest teilweise aus einer hochtemperaturbeständigen und temperaturwechselbeständigen Metallegierung gefertigt.

Im vorliegenden Ausführungsbeispiel weist diese Metallegierung folgende chemisch-metallurgische Zusammensetzung auf:
Cr 20%, Al 5,5%, Ti 0,5%, Y₂O₂ 0,5, Fe 73,5%.

Im Unterteil 6 des Brennofens 2 befinden sich die Antriebe 7a und 7b zur Realisierung des Durchlaufes der keramischen Produkte 15 durch den Brennraum 1 sowie der Antrieb 17 zur Realisierung der Rotation der keramischen Produkte 15 im Brennraum 1.

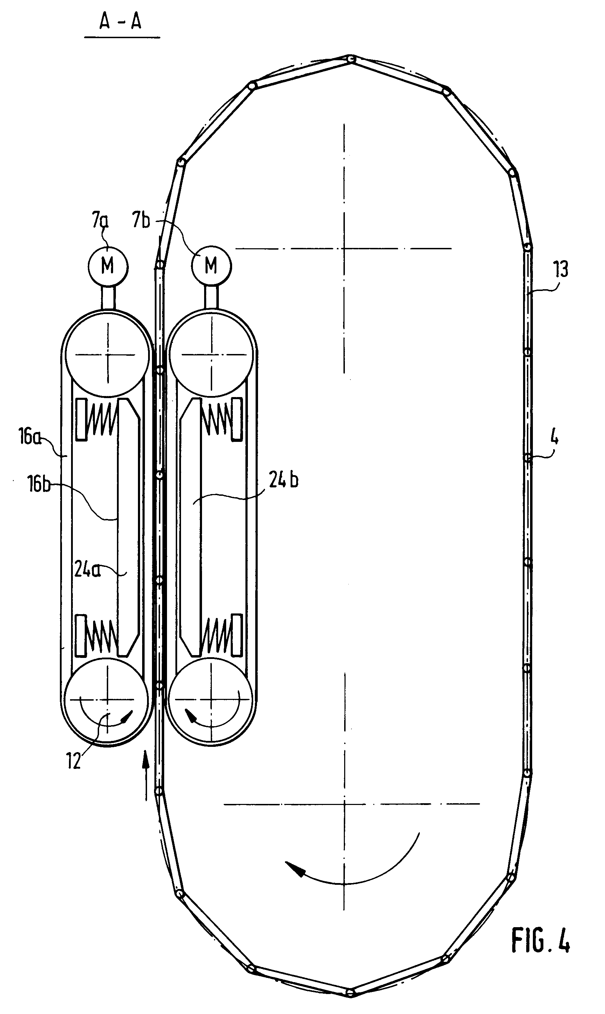

Die Antriebe 7a und 7b treiben über Rollen 12 zwei Durchlaufantriebszahnriemen 16a und 16b an, welche, wie aus Fig. 4 ersichtlich ist, über federbelastete Andrückelemente 24a und 24b gegen die Kettenglieder 13 gedrückt werden und über die auftretenden Reibungskräfte die Kettenglieder 13 in Längsrichtung in Bewegung setzen.

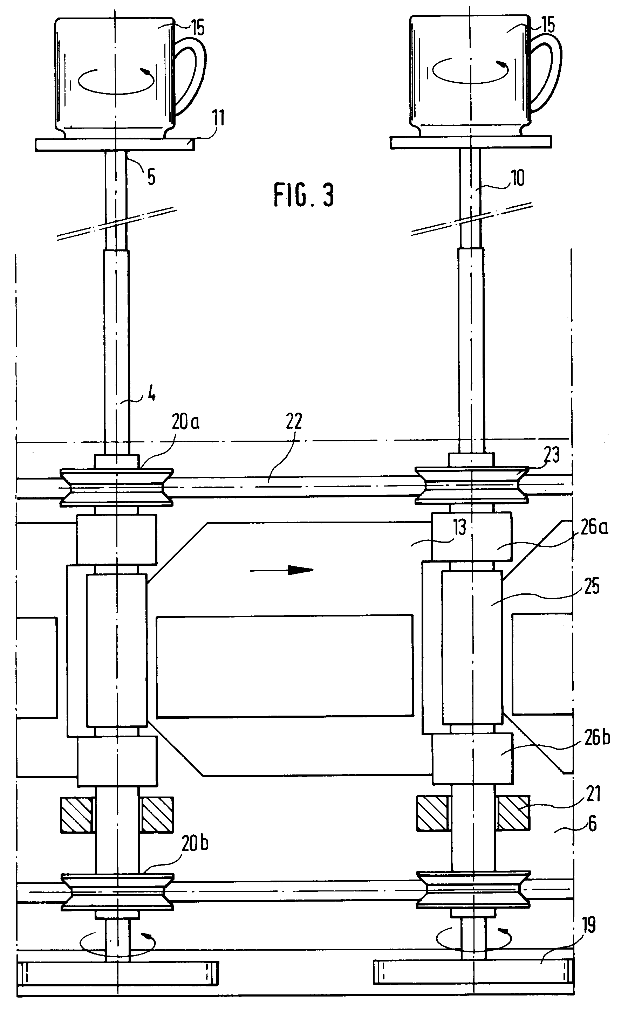

Wie insbesondere aus Fig. 3 ersichtlich, sind die Wellen 4 drehbar in die rohrförmigen Endstücke 25, 26a und 26b der Kettenglieder 13 eingebunden, so daß mit Längsbewegung der Kettenglieder 13 auch die Welle 4 entlang des Kanals 3 und dadurch über die Aufnahme- und Haltevorrichtung 5 die darauf befindlichen keramischen Produkte 15 durch den Brennraum 1 des Brennofens 2 bewegt werden.

Die Antriebe 7a und 7b sind regelbar, so daß gemäß den Erfordernissen des Brennregimes der Durchlauf der keramischen Produkte 15 durch den Brennraum 1 eingestellt werden kann.

Auch eine Drehrichtungsumkehr der Antriebe 7a und 7b und damit ein Wiederausfahren der in den Brennraum 1 eingefahrenen keramischen Produkte 15 ist möglich.

Zur Realisierung der Rotationgsbewegung der Welle 4 und somit der Aufnahme- und Haltevorrichtung 5 und der darauf befindlichen keramischen Produkte 15 ist ein Antrieb 17 vorgesehen, welcher über eine Drehscheibe 16 einen Rotationszahnriemen 18 antreibt, welcher in ein an dem Unterteil der Welle 4 angeordnetes Ritzel 19 eingreift.

Der Antrieb 17 ist ebenfalls bezüglich Drehzahl und Drehrichtung regelbar, so daß gemäß den Erfordernissen des Brennregimes die Drehrichtung und Rotationsgeschwindigkeit der keramischen Produkte 15 im Brennraum 1 eingestellt werden kann.

Der Rotationszahnriemen 18 weist eine in das Ritzel 19 eingreifende Außenverzahnung auf, so daß auch bei Stillstand des Antriebes 17 durch die mittels der Antriebe 7a und 7b bewirkte Längsbewegung entlang des Rotationszahnriemens 18 eine Rotation der keramischen Produkte 15 im Brennraum 1 erfolgt.

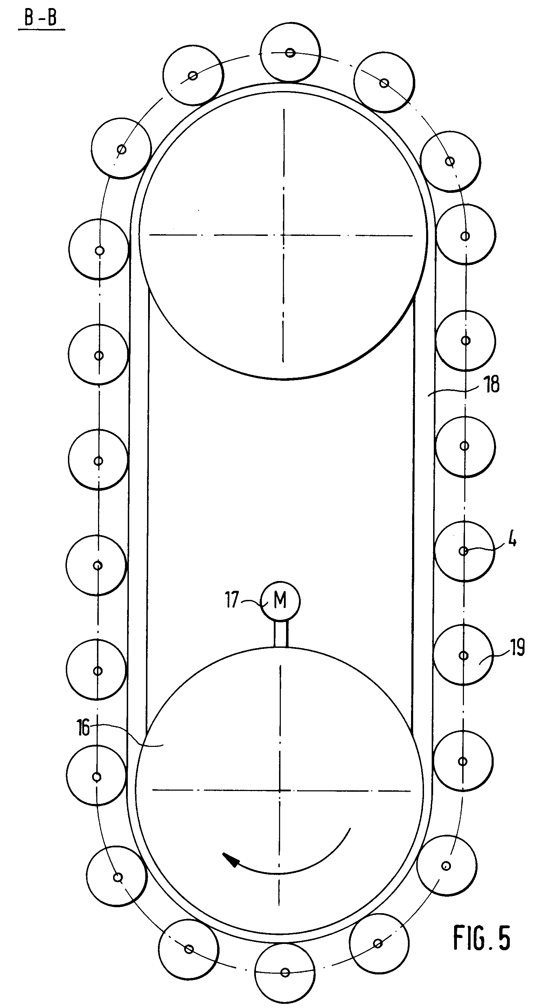

Das Zusammenwirken des Rotationszahnriemens 18 mit dem an der Welle 4 angeordneten Ritzel 19 ist in Fig. 5 dargestellt.

Die Antriebe 7a, 7b und 17 sind stufenlos und voneinander unabhängig regelbar. Hierdurch wird eine sehr variantenreiche Gesamtregelung des Brennvorganges ermöglicht.

Die Welle 4 wird durch die Lager 20a, 20b und 21 im Unterteil 6 des Brennofens 2 drehbar gelagert.

Die Lager 20a und 20b werden aus Rohren 22 im Zusammenwirken mit Laufrädern 23 gebildet.

Insgesamt sind im vorliegenden Ausführungsbeispiel zweiundzwanzig Wellen 4 und zweiundzwanzig Kettenglieder 13 angeordnet.

Das Verfahren zur Betriebsführung des Brennofens 2 basiert darauf, daß die keramischen Produkte 15 den Brennraum 1 mittels einer Aufnahme- und Haltevorrichtung 5 einerseits durchlaufen, andererseits im Brennraum 1 auf der Aufnahme- und Haltevorrichtung 5 um ihre eigene Längsachse rotieren.

Dabei ist die Durchlaufgeschwindigkeit und die Rotationsgeschwindigkeit der keramischen Produkte 15 getrennt voneinander stufenlos regelbar. Dies eröffnet eine Vielzahl von Möglichkeiten zur Optimierung des Brennprozesses.

Die temperaturmäßige Abdichtung des Unterteils 6 des Brennofens 2 gegenüber dem Brennraum 1 über den Kanal 3 erfolgt durch einen Druckausgleich, wobei zur Realisierung des Druckausgleiches der Druck im Brennraum 1 und im Unterteil 6 gemessen wird und der Differenzdruck den Druckausgleich derart regelt, daß ein Überdruck im Brennraum 1 und damit ein Vordringen der Wärme in den Unterteil 6 wirksam verhindert wird.

Die Beschickung des Brennofens 2 mit den keramischen Produkten 15 und deren Entnahme nach erfolgtem Brennprozeß an der Beschickungs- und Entnahmeeinheit 8 erfolgt automatisch durch entsprechend programmierte Industrieroboter.

## Patentansprüche

1. Brennofen zur Herstellung keramischer Produkte mit einem Brennraum, welchen die keramischen Produkte im Durchlauf passieren,
**dadurch gekennzeichnet,**
daß in den U-förmig angeordneten Brennraum (1) des Brennofens (2) über einen Kanal (3) mindestens eine Welle (4) führt, welche an ihrem in den Brennraum (1) hineinragenden Ende eine Aufnahme- und Haltevorrichtung (5) für die keramischen Produkte (15) aufweist und welche an ihrem anderen Ende im Unterteil (6) des Brennofens (1) mit einem ersten Antrieb (7a,7b) in Verbindung steht, welcher einen Durchlauf der Aufnahme- und Haltevorrichtung (5) durch den Brennraum (1) realisiert und mit einem zweiten Antrieb (17) in Verbindung steht, welcher eine Rotation der Welle (4) um ihre Längsachse bewirkt.

2. Brennofen nach Anspruch 1, dadurch gekennzeichnet, daß der U-förmig angeordnete Brennraum (1) des Brennofens (2) einen Brennraumeingang (1a) und einen Brennraumausgang (1b) aufweist und dem Brennofen (2) an dem Brennofeneingang (1a) und dem Brennofenausgang (1b) eine Beschickungs- und Entnahmeeinheit (8) vorgeordnet ist, wobei zur Beschickung und Entnahme der keramischen Produkte (15) an der Beschickungs- und Entnahmeeinheit (8) Industrieroboter angeordnet sind.

3. Brennofen nach Anspruch 1, dadurch gekennzeichnet, daß die Aufnahme- und Haltevorrichtung (5) mit der Welle (4) lösbar, vorzugsweise durch einen am Flansch (10) angeordneten Bajonettverschluß (9), verbunden ist.

4. Brennofen nach Anspruch 1 oder 3, dadurch gekennzeichnet, daß die Aufnahme- und Haltevorrichtung (5) ein an dem Flansch (10) angeordneter Drehteller (11) ist.

5. Brennofen nach Anspruch 1 oder 3, dadurch gekennzeichnet, daß die Aufnahme- und Haltevorrichtung (5) aus mindestens drei Metallstangen oder Metallrohren gebildet wird, welche nach oben geneigt an dem Flansch (10) angeordnet sind und neben dar Aufnahme und Halterung der keramischen Produkte (15) gleichzeitig deren Zentrierung dienen, wobei die Neigung der Metallstangen oder Metallrohre nach oben variabel ist und im Normalfall ca. 2° beträgt und die Länge der Metallstangen oder Metallrohre und damit die Größe der Aufnahme- und Haltevorrichtung (5) der Größe der zu brennenden keramischen Produkte (15) angepaßt ist.

6. Brennofen nach Anspruch 4, dadurch gekennzeichnet, daß der Durchmesser des Drehtellers (11) der Größe der zu brennenden keramischen Produkte (15) angepaßt ist.

7. Brennofen nach Anspruch 1, dadurch gekennzeichnet, daß der erste Antrieb (7a,7b) ein Kettenantrieb durch Zusammenwirken jeweils eines Durchlaufantriebszahnriemens (16a,16b) mit den Kettengliedern (13) bewirkt, welcher über die Welle (4) den Durchlauf der Aufnahme- und Haltevorrichtung (5) und somit der keramischen Produkte (15) durch den Brennraum (1) realisiert, wobei die Welle (4) drehbar in die rohrförmigen Endstücke (25,26a,26b) der Kettenglieder (13) eingebunden ist und insgesamt zweiundzwanzig Wellen (4), entsprechend der Länge des Brennofens (1), angeordnet sind.

8. Brennofen nach Anspruch 1, dadurch gekennzeichnet, daß der zweite Antrieb (17) über eine Drehscheibe (16) und einen Rotationsantriebszahnriemen (18), welcher in ein Ritzel (19) eingreift, eine Rotation der Welle (4) um ihre Längsachse und hierdurch eine Rotation der Aufnahme- und Haltevorrichtung (5) sowie der keramischen Produkte (15) im Brennraum bewirkt.

9. Brennofen nach Anspruch 1, 7 oder 8, dadurch gekennzeichnet, daß die Antriebe (7a,7b,17) zur Realisierung des Durchlaufes und zur Realisierung der Rotation stufenlos und voneinander unabhängig über jeweilige Regeleinrichtungen bezüglich Drehzahl und Laufrichtung regelbar sind.

10. Brennofen nach Anspruch 1, dadurch gekennzeichnet, daß die Welle (4) im Unterteil (6) des Brennofens (2) durch Lager (20a,20b,21) drehbar gelagert ist, wobei die Lager (20a,20b) aus einem Rohr (22) und einem Laufrad (23) gebildet werden.

11. Brennofen nach Anspruch 7, dadurch gekennzeichnet, daß die Durchlaufantriebszahnriemen (16a,16b) durch federbelastete Andrückelemente (24a,24b) gegen die Kettenglieder (13) gedrückt werden.

12. Brennofen nach einem der Ansprüche 3, 4 oder 5, dadurch gekennzeichnet, daß die Aufnahme- und Haltevorrichtung (5) zumindest teilweise aus einer hochtemperaturbeständigen und temperaturwechselbeständigen Metallegierung besteht, wobei die hochtemperaturbeständige und temperaturwechselbeständige Metallegierung vorzugsweise folgende chemisch-metallurgische Zusammensetzung aufweist:
Cr 20%, Al 5,5%, Ti 0,5%, Y₂O₂ 0,5%, Fe 73,5%.

13. Verfahren zur Betriebsführung eines Brennofens zur Herstellung keramischer Produkte im Durchlauf,
**dadurch gekennzeichnet,**
daß die keramischen Produkte (15) den Brennraum (1) mittels einer Aufnahme- und Haltevorrichtung (5) in Längsrichtung durchlaufen und die Aufnahme- und Haltevorrichtung (5) mit den keramischen Produkten (15) gleichzeitig um ihre eigene Längsachse rotiert.

14. Verfahren nach Anspruch 13, dadurch gekennzeichnet, daß die Durchlaufgeschwindigkeit und die Rotationsgeschwindigkeit der Aufnahme- und Haltevorrichtung (5) getrennt voneinander und stufenlos regelbar ist.

15. Verfahren nach Anspruch 13, dadurch gekennzeichnet, daß die temperaturmäßige Abdichtung des Unterteils (6) des Brennofens (2) gegenüber dem Brennraum (1) über den Kanal (3) durch einen Druckausgleich erfolgt, wobei zur Realisierung des Druckausgleiches der Druck im Brennraum (1) und im Unterteil (6) gemessen wird und der Differenzdruck den Druckausgleich derart regelt, daß ein Überdruck im Brennraum (1) und somit ein Vordingen der Wärme in den Unterteil (6) vermieden wird.

16. Verfahren nach Anspruch 13, dadurch gekennzeichnet, daß die Beschickung und Entnahme der keramischen Produkte (15) an der Beschickungs- und Entnahmeeinheit (8) automatisch erfolgt.
